(19) Europäisches Patentamt / European Patent Office / Office européen des brevets

(11) **EP 4 319 428 A1**

(12) **EUROPEAN PATENT APPLICATION**

(43) Date of publication:
**07.02.2024 Bulletin 2024/06**

(21) Application number: **22188888.6**

(22) Date of filing: **04.08.2022**

(51) International Patent Classification (IPC):
**H04W 72/12** (2023.01)   **H04W 52/04** (2009.01)

(52) Cooperative Patent Classification (CPC):
**H04W 72/1215; H04B 17/318**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **WILDSCHEK, Torsten**
**Gloucester, GL4 5TW (GB)**
• **SABOURI-SICHANI, Faranaz**
**9220 Aalborg (DK)**
• **MEDINA, Daniel**
**80636 Munich (DE)**
• **PRATAS, Nuno Manuel Kiilerich**
**9260 Gistrup (DK)**
• **VAN PHAN, Vinh**
**90100 Oulu (FI)**
• **YU, Ling**
**02700 Kauniainen (FI)**
• **LINDHOLM, Jari**
**01940 Palojoki (FI)**

(74) Representative: **Script IP Limited**
**Suite J, Anchor House**
**School Close**
**Chandlers Ford**
**Eastleigh, Hampshire SO53 4DY (GB)**

Remarks:
Amended claims in accordance with Rule 137(2) EPC.

(54) **DETECTING TRANSMISSIONS**

(57) An apparatus, comprising: means for detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver is at least one of: matching a characteristic of a second radio access technology transmission, and failing to match a characteristic of said first radio access technology transmission; and further comprising means for determining whether to transmit in a second portion of said transmission time interval using a first radio access technology transmitter based on said detecting by said means for detecting.

FIG. 20

**Description**

TECHNOLOGICAL FIELD

Various example embodiments relate to apparatus and methods for wireless telecommunications networks.

BACKGROUND

Apparatus for wireless telecommunication networks are known. As the functionality and use of such apparatus increases, unexpected consequences can occur. Accordingly, it is desired to provide improved apparatus for wireless telecommunications networks.

BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to various, but not necessarily all, example embodiments of the invention there is provided an apparatus, comprising: means for detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver is at least one of: matching a characteristic of a second radio access technology transmission, and failing to match a characteristic of said first radio access technology transmission; and further comprising means for determining whether to transmit in a second portion of said transmission time interval using a first radio access technology transmitter based on said detecting by said means for detecting.

The transmission time interval may comprise a subframe and said means for detecting may use said first radio access technology receiver to monitor for transmissions occurring within said subframe.

The subframe may comprise a plurality of slots and said second portion may be a slot other than an earliest slot among said plurality of slots.

The subframe may comprise a physical sidelink feedback channel occasion of said first radio access technology and said second portion may comprise at least one physical sidelink feedback channel symbol.

The first portion may comprise at least a period suitable to carry a second radio access technology symbol.

The first portion may comprise at least a period following a boundary of said transmission time interval suitable to carry said second radio access technology symbol

The first portion may comprise at least a period suitable to carry at least one said second radio access technology symbol.

The means for detecting may detect that no transmissions are occurring when no signal above a noise threshold is detected within said first portion.

The characteristic of said second radio access technology transmission may comprise a power spectral density profile of transmissions by said second radio access technology.

The means for detecting may detect that a transmission other than said first radio access technology transmission is occurring when a power spectral density profile of said transmission detected within said first portion matches a power spectral density profile of transmissions by said second radio access technology

The power spectral density profile of transmissions by said second radio access technology may step between a higher power spectral density and a lower power spectral density.

The higher power spectral density and said lower power spectral density may vary by around 3dB.

The characteristic of said first radio access technology transmission may comprise an absence of transmissions over noise during at least one period within said first portion corresponding to at least one guard period of said transmission time interval.

The characteristic of said first radio access technology transmission may comprise a received signal strength below a threshold during said at least one period within said first portion corresponding to at least one guard period of said transmission time interval.

The characteristic of said first radio access technology transmission may comprise received transmissions which decode as duplicated symbols within said transmission time interval.

The characteristic of said first radio access technology transmission may comprise received transmissions which decode as first radio access technology duplicated symbols within said transmission time interval.

The means for detecting may detect that a transmission other than said first radio access technology transmission is occurring when a transmission is detected during at least one period within said first portion corresponding to at least one guard period of said transmission time interval.

The means for detecting may detect that a transmission other than said first radio access technology transmission is occurring when a received signal strength is above a threshold during said at least one period within said first portion corresponding to said at least one guard period of said transmission time interval.

The means for detecting may detect that a transmission other than said first radio access technology transmission is occurring when received transmissions detected by said first radio access technology receiver decode as other than expected duplicated symbols.

The means for detecting may detect that a transmission other than said first radio access technology transmission is occurring when received transmissions detected by said first radio access technology receiver decode as other than expected first radio access technology duplicated symbols.

The means for determining may transmit within said second portion of said transmission time interval using said first radio access technology transmitter when said means for detecting detects that no transmissions other than first radio access technology transmissions are occurring.

The means for determining may determine that no transmissions can be performed in said second portion of said transmission time interval using said first radio access technology transmitter when said means for detecting detects that transmissions other than first radio access technology transmissions are occurring.

The means for determining may postpone transmissions for a postponement period comprising at least said second portion of said transmission time interval using said first radio access technology transmitter when said means for detecting detects that transmissions are occurring.

The postponement period may comprise at least a plurality of technology transmission time intervals.

The means for determining may select said postponement period based on a configured subcarrier spacing of said first radio access technology.

The means for detecting may reperform said detecting upon expiry of said postponement period.

The first radio access technology may comprise New Radio.

The second radio access technology may comprise Long Term Evolution.

Each Long Term Evolution subframe may coincide with a plurality of New Radio slots.

The transmissions may comprise sidelink transmissions.

The apparatus may comprise a user equipment.

The means set out above may be circuitry.

According to various, but not necessarily all, example embodiments of the invention there is provided apparatus and its optional features set out above wherein the means comprise: at least one processor; and at least one memory storing instructions that, when executed by the at least one processor, cause the performance of the apparatus. According to various, but not necessarily all, example embodiments of the invention there is provided a method, comprising: detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver is at least one of: matching a characteristic of a second radio access technology transmission, and failing to match a characteristic of said first radio access technology transmission; and determining whether to transmit in a second portion of said transmission time interval using a first radio access technology transmitter based on said detecting.

The transmission time interval may comprise a subframe and said detecting may use said first radio access technology receiver to monitor for transmissions occurring within said subframe.

The subframe may comprise a plurality of slots and said second portion may be a slot other than an earliest slot among said plurality of slots.

The subframe may comprise a physical sidelink feedback channel occasion of said first radio access technology and said second portion may comprise at least one physical sidelink feedback channel symbol.

The first portion may comprise at least a period suitable to carry a second radio access technology symbol.

The first portion may comprise at least a period following a boundary of said transmission time interval suitable to carry said second radio access technology symbol

The first portion may comprise at least a period suitable to carry at least one said second radio access technology symbol.

The detecting may detect that no transmissions are occurring when no signal above a noise threshold is detected within said first portion.

The characteristic of said second radio access technology transmission may comprise a power spectral density profile of transmissions by said second radio access technology. The detecting may detect that a transmission other than said first radio access technology transmission is occurring when a power spectral density profile of said transmission detected within said first portion matches a power spectral density profile of transmissions by said second radio access technology.

The power spectral density profile of transmissions by said second radio access technology may step between a higher power spectral density and a lower power spectral density.

The higher power spectral density and said lower power spectral density may vary by around 3dB.

The characteristic of said first radio access technology transmission may comprise an absence of transmissions over noise during at least one period within said first portion corresponding to at least one guard period of said transmission time interval.

The characteristic of said first radio access technology transmission may comprise a received signal strength below a threshold during said at least one period within said first portion corresponding to at least one guard period of said transmission time interval.

The characteristic of said first radio access technology transmission may comprise received transmissions which decode as duplicated symbols within said transmission time interval.

The characteristic of said first radio access technology transmission may comprise received transmissions which decode as first radio access technology duplicated symbols within said transmission time interval.

The detecting may detect that a transmission other than said first radio access technology transmission is occurring when a transmission is detected during at least one period within said first portion corresponding to at least one guard period of said transmission time interval.

The detecting may detect that a transmission other than said first radio access technology transmission is occurring when a received signal strength is above a threshold during said at least one period within said first portion corresponding to said at least one guard period of said transmission time interval.

The detecting may detect that a transmission other than said first radio access technology transmission is occurring when received transmissions detected by said first radio access technology receiver decode as other than expected duplicated symbols.

The detecting may detect that a transmission other than said first radio access technology transmission is occurring when received transmissions detected by said first radio access technology receiver decode as other than expected first radio access technology duplicated symbols.

The determining may transmit within said second portion of said transmission time interval using said first radio access technology transmitter when said detecting detects that no transmissions other than first radio access technology transmissions are occurring.

The determining may determine that no transmissions can be performed in said second portion of said transmission time interval using said first radio access technology transmitter when said detecting detects that transmissions other than first radio access technology transmissions are occurring.

The determining may postpone transmissions for a postponement period comprising at least said second portion of said transmission time interval using said first radio access technology transmitter when said detecting detects that transmissions are occurring

The postponement period may comprise at least a plurality of technology transmission time intervals.

The determining may select said postponement period based on a configured subcarrier spacing of said first radio access technology.

The detecting may reperform said detecting upon expiry of said postponement period.

The first radio access technology may comprise New Radio.

The second radio access technology may comprise Long Term Evolution.

Each Long Term Evolution subframe may coincide with a plurality of New Radio slots.

The transmissions may comprise sidelink transmissions.

According to various, but not necessarily all, example embodiments of the invention there is provided a method, comprising: detecting a first radio transmission during a first portion of a transmission time interval; determining the presence or absence of a uniformity in time and/or frequency in the first radio transmission during the first portion of the transmission time interval; and determining, based on the determined presence or absence, whether to perform a second radio transmission in a second portion of the transmission time interval.

The method may comprise the optional method features set out above.

According to various, but not necessarily all, example embodiments of the invention there is provided an apparatus, comprising: at least one processor; and at least one memory storing instructions that, when executed by the at least one processor, cause the apparatus at least to perform: detecting, using a first radio access technology receiver, whether transmissions are occurring in a first portion of a second radio access technology transmission time interval; and determining whether to perform transmissions in a second portion of the second radio access technology transmission time interval using a first radio access technology transmitter based on the detecting.

The instructions, which may be computer program code may be configured to, with the at least one processor, cause the apparatus at least to perform the optional steps set out above.

According to various, but not necessarily all, example embodiments of the invention there is provided a computer program operable, when executed on a computer, to perform the method and the optional steps set out above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION

Some example embodiments will now be described with reference to the accompanying drawings in which:

FIGS 1 and 2 show a deployment band configuration for C-V2X at 5.9 GHz in Europe;

FIG. 3 shows examples of LTE-V2X and NR-V2X co-channel coexistence in the same carrier: (a) FDM coexistence; (b) TDM coexistence; (c) Mixed FDM and TDM coexistence; (d) Coexistence of LTE-V2X + NR-V2X in the same resources, where NR-V2X has additional dedicated resources; and (e) Coexistence of LTE-V2X + NR-V2X in the same resources, where NR-V2X accesses the resources opportunistically;

FIG. 4 shows LTE SL resource allocation modes: (a) Mode 3; (b) Mode 4;

FIG. 5 shows an LTE-V2X (subframe) slot format for the PSSCH and PSCCH;

FIG. 6 shows LTE-V2X channelization, with adjacent and non-adjacent PSCCH+PSSCH;

FIG. 7 shows NR SL resource allocation modes: (a) Mode 1; (b) Mode 2;

FIG. 8 shows a SL slot format: (a) slot with PSCCH/PSSCH; (b) slot with PSCCH/PSSCH and PSFCH;

FIG. 9 shows PSSCH DMRS configurations based on the number of used symbols and duration of the PSCCH [TS 38.211];

FIG. 10 shows time domain phases of the NR SL mode 2 sensing based resource selection procedure;

FIG. 11 shows SL Mode 2 resource allocation scheme, including re-evaluation;

FIG. 12 shows a procedure to determine the resource candidate set;

FIG. 13 shows resource re-evaluation time constraints, where $T_3$ denotes the time before the occurrence of the selected resource after which the sensing UE can commit to the transmission in the selected resource;

FIG. 14 shows an example of an LTE-V2X resource pool overlapping with an NR-V2X resource pool: (a) NR-V2X resource pool with subchannels consisting of 25 PRBs; (b) NR-V2X resource pool with subchannels consisting of 50 PRBs;

FIG. 15 shows introduced problems at the NR Tx side for not being able to decode LTE SCIs;

FIG. 16 shows an example of LTE transmission overlapping an NR slot;

FIG. 17 shows NR-only UE behaviour when using the detection mechanism of an example embodiment: (a) NR-only Tx enabled behaviour; (b) NR-only Rx enabled behaviour with 30 kHz SCS; and (c) NR-only Rx enabled behaviour with 15 kHz SCS;

FIG. 18 shows an example of LTE-V2X PSD measured over one subframe for adjacent and non-adjacent PSCCH+PSSCH;

FIG. 19 shows an example of an LTE SL slot format together with an NR SL slot format with PSCCH/PSSCH and PSFCH; and

FIG. 20 shows a flow chart illustrating UE behaviour according to an example embodiment.

DETAILED DESCRIPTION

Before discussing the example embodiments in any more detail, first an overview will be provided. Some example embodiments provide an arrangement whereby a first network node seeks to inhibit transmissions using resources shared by different radio access technologies in order to prevent those shared resources from being used simultaneously by different network nodes transmitting using different radio access technologies resulting in collisions between those different transmissions. For example, the first network node may require to perform transmissions using a first radio access technology, but those resources may be shared by another (such as a second) radio access technology. The first network node may wish to avoid transmission using the first radio access technology when the same shared resources are being used by a second network node transmitting with the second radio access technology. The first network node may not have the functionality to support the second radio access technology (and so only has functionality supporting the first radio access technology), may not be able to monitor for transmissions using both the first and second radio access technologies simultaneously (and so may have functionality supporting both the first and second radio access technologies but it unable to operate them simultaneously) or may simply prefer not to monitor for transmissions using both the first and second radio access technologies simultaneously. So instead, the first network node detects for transmissions in the shared resources to determine whether those shared resources are being used for transmissions by a network node using other than the first radio access technology such as, for example, the second radio access technology. That detection is typically performed using the functionality provided by the first network node for the first radio access technology. By identifying characteristics (power levels, slot formats and the like) of the transmissions received using the first radio access technology which are either inconsistent with first radio access technology transmissions or which are consistent with second radio access technology, the first network node can detect that those shared resources are already in use. When it is identified that the shared resources are already in use, then transmissions by the first network node can be delayed or postponed. When it is identified that the shared resources are not already in use, then transmissions by the first network node can be permitted. This enables the first network node to avoid transmission collisions within the shared resources without needing to employ second radio access technology functionality to detect those second radio access technology transmissions.

The following provides further useful background context. 3GPP RAN approved a work item "NR sidelink evolution" (RP-213678) in Rel-18 to expand the applicability of New Radio (NR) sidelink to commercial use cases and additionally consider the Vehicle-to-Everything (V2X) deployment scenario where both Long Term Evolution (LTE) V2X and NR V2X devices are to coexist in the same frequency channel. For the two different types of devices to coexist while using a common carrier frequency, it is important that there is mechanism to efficiently utilize resource allocation by the two technologies without negatively impacting the operation of each technology. Some example embodiments focus on this aspect, i.e. coexistence on LTE V2x and NR V2x.

Spectrum Regulation

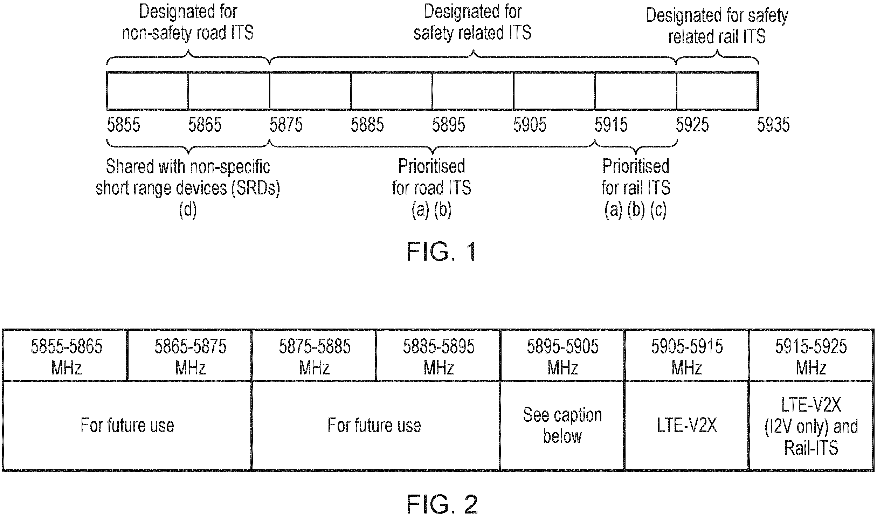

European administrations have designated the bands 5855-5875 MHz and 5875-5925 MHz - referred to as the 5.9 GHz band - for use by road Intelligent Transport Systems (ITS). Industry is planning for the deployment of Cellular Vehicle-to-Everything ((C-V2X) (Long Term Evolution (LTE)-V2X and New Radio (NR)-V2X)) technologies for direct communications (via the $PC_5$ interface) in the 5.9 GHz band, as depicted in FIG 1 which shows the deployment band configuration for C-V2X at 5.9 GHz in Europe, from 5GAA position paper. The following aspects should be considered in relation to FIG 1: a) No harmful interference shall be caused to the application having priority; b) Road-ITS and rail-ITS shall remain confined to their respective prioritized frequency range until such time when appropriate spectrum sharing solutions are defined by ETSI (but see (c)); c) Vehicle-to-vehicle (V2V) communications for road-ITS may only be permitted at 5915-5925 MHz once spectrum sharing solutions for the protection of rail ITS have been developed at European Telecommunications Standards Institute (ETSI). In the absence of such sharing solutions for the protection of rail-ITS, national administrations may permit infrastructure-to-vehicle (I2V) communications for road-ITS at 5915-5925 MHz subject to coordination with rail-ITS; d) Use of spectrum in the frequency range 5855-5875 MHz is on a non-interference/non-protected basis and includes use by non-safety road-ITS and non-specific short range devices.

In the deployment band configuration proposed by 5G Automotive Association (5GAA) for C-V2X at 5.9 GHz in Europe, LTE-V2X is constrained to the 5905-5915 MHz and 5915-5925 MHz bands. The remaining spectrum is expected to be made available to NR-V2X as shown in FIG. 2 which shows the deployment band configuration for C-V2X at 5.9 GHz in Europe, 5GAA did not take a position on the use of 5895-5905 MHz by C-V2X. Additionally, 5GAA noted the challenges associated with the impact of inter-technology coexistence on safety. Namely, "there is an ongoing coexistence work item at ETSI to investigate the viability of co-channel coexistence between LTE-V2X and ITS-G5 in the 5.9 GHz band. Such co-existence will inevitably negatively impact the ability of the two technologies to deliver safe and reliable communications; and will potentially also impact the specifications of the technologies and the complexity of the products."

Previous standardization work contextualization with Rel-18 objective

In Rel-16, RAN studied and introduced the in-device coexistence framework for NR SL

- the outcome of the related RAN4 work was captured in TR 38.886. From that study, the following mechanisms were introduced:

- Time Division Multiplex (TDM) based:

  ∘ Synchronization/subframe boundary alignment is needed between LTE and NR sidelink;
  ∘ Long term time-scale TDM operation:
  □ LTE SL and NR SL resource pools are configured to not overlap in time domain => No specification impact.
  ∘ Short term time-scale TDM operation:

    □ For Transmission (TX)/TX and TX/Reception (RX) overlap, if packet priorities of both LTE and NR sidelink transmissions/receptions are known to both Radio Access Technologies (RATs) prior to time of transmission subject to processing time restriction, then the packet with a higher relative priority is transmitted/received;

☐ Equal priority TX/TX or TX/RX is up to User Equipment (UE) implementation;

☐ RX/RX case is up to UE implementation;

☐ Prioritization details:

- The priority of physical sidelink feedback channel (PSFCH) is the same as the corresponding physical sidelink control channel (PSSCH);
- The priorities of LTE physical sidelink broadcast channel (PSBCH) and NR Sidelink Synchronization Signal Block (S-SSB) are (pre-) configured;
- If multiple NR SL transmissions/receptions overlap with single LTE SL TX/RX, the highest priority NR SL TX/RX determines the priority of the NR SL.

- Frequency Division Multiple (FDM) based:

    o Static frequency allocation between NR and LTE SL;
    o Synchronization is not needed between NR and LTE if frequency separation between LTE and NR is large enough;
    o Static power allocation, which implies that full UE TX power is used only

when LTE and NR SL are transmitted simultaneously.

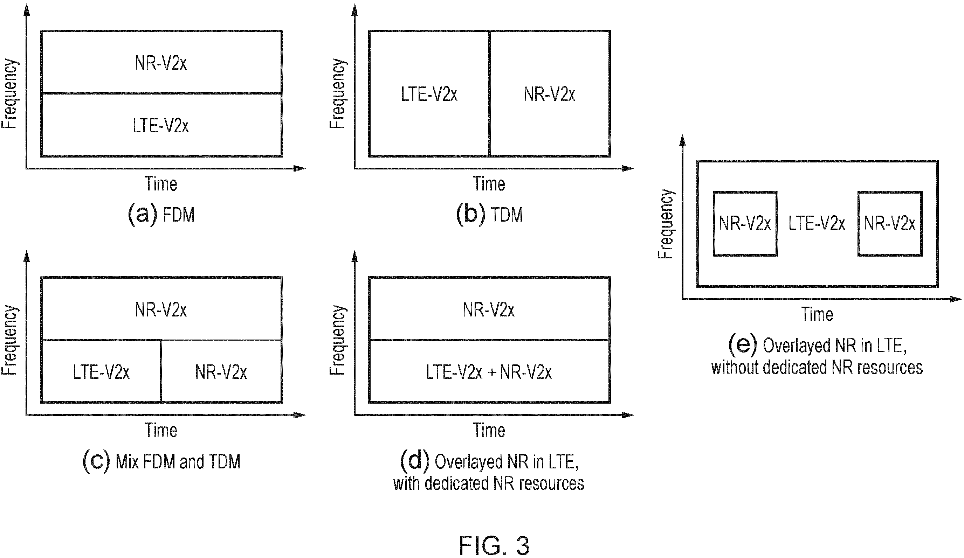

Note that the objective in Rel-18 is to go beyond in-device coexistence and focus on co-channel coexistence, i.e., the coexistence between different devices (UEs) in the same radio resources / carrier frequency. FIG. 3 shows some examples of coexistence of LTE-V2X and NR-V2X in the same radio resources. In particular, FIG. 3 shows examples of LTE-V2X and NR-V2X co-channel coexistence in the same carrier: (a) FDM coexistence; (b) TDM coexistence; (c) Mixed FDM and TDM coexistence; (d) Coexistence of LTE-V2X + NR-V2X in the same resources, where NR-V2X has additional dedicated resources; and (e) Coexistence of LTE-V2X + NR-V2X in the same resources, where NR-V2X accesses the resources opportunistically.

From a resource use point of view, dynamic spectrum sharing, as in the examples depicted in FIGS. 3(d) and (e), is more flexible and enables higher efficiency. However, these schemes have the drawback of being more complex due to the ancillary mechanisms that enable their coexistence with other systems. In contrast, static spectrum sharing options, as those depicted in FIGS. 3 (a), (b) and (c) are simpler. It can also be anticipated that FIG. 3(e) may be the only available option in practice, as the LTE-V2X devices may be configured to occupy the entire bandwidth and NR-V2X devices will need to be able to adapt to that in order to be able to access the ITS band. However, considering potential difficulties to modify pre-configuration and it may be better to allow NR V2X UE use all the available resources, so that there are no dedicated resources for LTE (or NR) but the same resources are available for both i.e. complete overlap. As no enhancement is expected from LTE-V2X point of view to enable this sharing, even no change or reconfiguration may be expected to the resource pool configurations associated with the LTE-V2X device. Instead it is expected that all effort will have to be done from the NR-V2X device point of view, therefore dynamic spectrum sharing schemes become the only viable solution for LTE-V2X and NR-V2X coexistence. Furthermore, the newer vehicles are introduced into the market, the more critical it will become to support advanced V2X use cases that require NR-V2X to operate. At the same time, since Cooperative Awareness Messages (CAM) (or Basic Safety Messages (BSM)) can be both sent using LTE-V2X or NR-V2X, then as we progress in time, it is expected that more and more vehicles will utilize NR-V2X and less LTE-V2X. Therefore, by enabling LTE-V2X and NR-V2X to coexist in the same resources, then this will enable a soft re-farming of the LTE-V2X resources. In contrast, if instead static TDM or FDM deployments are considered for LTE-V2X and NR-V2X, this will imply that the resources associated with LTE-V2X will remain allocated potentially for several decades without NR-V2X being able to use those resources. Of course, for this to make sense, NR-V2X will also have to be allowed for safety related ITS. In the deployment scenario where NR-V2X devices are able to use the same resources (i.e., the example depicted in FIG. 3(d)), the NR-V2X numerology needs to be contained as perfectly as possible within the LTE-V2X numerology. NR-V2X is expected to be deployed in FR1 with a sub-carrier spacing of 30 kHz, while LTE-V2X has a sub-carrier spacing of 15 kHz. Therefore, in the time-domain, two NR-V2X slots can be contained in one LTE-V2X subframe, while in the frequency domain, an NR-V2X physical resource block (PRB) will have twice the bandwidth of an LTE-V2X PRB. Both LTE-V2X and NR-V2X SL resources are organized into resource pools, which in the time domain are organized into slots (NR-V2X) or subframes (LTE-V2X), while in the frequency domain these are organized into subchannels composed by a number of PRBs. The configurable number of PRBs for LTE-V2X and NR-V2X are as follows:

- LTE-V2X: 4, 5, 6, 8, 9, 10, 12, 15, 16, 18, 20, 25, 30, 48, 50, 72, 75, 96, 100
- NR-V2X: 10, 12, 15, 20, 25, 50, 75, 100

So, assuming a perfect overlap between an LTE-V2X resource pool and one (or more) NR-V2X resource pools, we could have the following pairing of configurations, as depicted in Table 1. Note that this is just an example, but in practice, as there will be multiple LTE-V2X resource pools, it is possible to achieve any number of LTE-V2X and NR-V2X resource pools. The only important aspect is that the LTE-V2X and NR-V2X PRBs are aligned both in time and frequency.

Table 1: Example of fully overlapped NR-V2X resource pool into LTE-V2X resource pool.

| LTE-V2X subchannel configuration | NR-V2X subchannel configurations with perfect overlap |
|---|---|
| 20 | 10 |
| 30 | 15 |
| 48 | 12 |
| 50 | 25 |
| 75 | 25 |
| 100 | 50,25 |

LTE-V2X overview

*Overview*

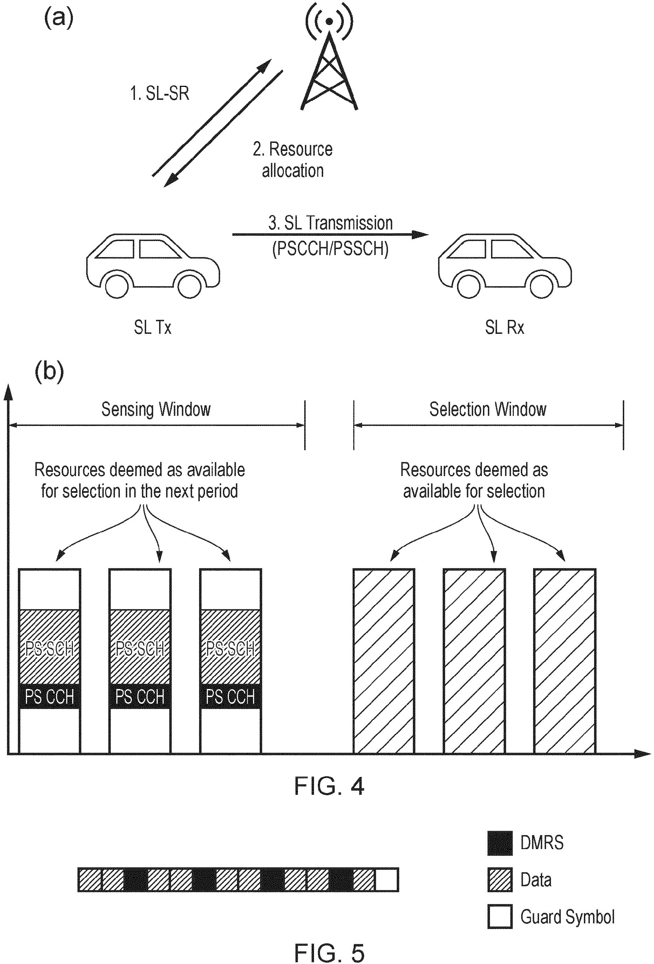

During 3GPP Rel-14 and Rel-15, LTE-V2X has been designed to facilitate vehicles to communicate with other nearby vehicles via direct/SL communication. Communications between these vehicles can take place in LTE-V2X using either mode 3 or mode 4, which are depicted in FIG. 4 which shows LTE SL resource allocation modes: (a) Mode 3; (b) Mode 4. When in mode 3, the sidelink radio resources are scheduled by the base station or evolved NodeB (eNB), hence, it is only available when vehicles are under cellular coverage. When in mode 4, the vehicles autonomously select their sidelink radio resources regardless of whether they are under cellular coverage or not. When the vehicles are under cellular coverage, the network decides how to configure the LTE-V2X channel and informs the vehicles through the LTE-V2X configurable parameters. The message includes the carrier frequency of the LTE-V2X channel, the LTE-V2X resource pool, synchronization references, the channelization scheme, the number of subchannels per subframe, and the number of resource blocks (RBs) per subchannel, among other things. When the vehicles are not under cellular coverage, they utilize a preconfigured set of parameters to replace the LTE-V2X configurable parameters. However, the standard does not specify a concrete value for each parameter. The LTE-V2X resource pool indicates which subframes of a channel are utilized for LTE-V2X. The rest of the subframes can be utilized by other services, including cellular communications. The autonomous resource selection in mode 4 is performed using the sensing and resource exclusion procedure specified in Release 14, where a vehicle reserves the selected subchannel(s) for a number of periodically recurring packet transmissions. This in turn can be sensed by other vehicles, affecting their own resource selection/exclusion decisions.

*Physical layer*

LTE-V2X uses Single-Carrier Frequency-Division Multiple Access (SC-FDMA) and supports 10 MHz and 20 MHz channels. The channel is divided into 180 kHz RBs that correspond to 12 subcarriers of 15 kHz each. In the time domain, the channel is organized into 1 ms subframes. Each subframe has 14 Orthogonal Frequency Division Multiplexing (OFDM) symbols with normal cyclic prefix. Nine of these symbols are used to transmit data and four of them (3rd, 6th, 9th, and 12th) are used to transmit demodulation reference signals (DMRSs) for channel estimation and combating the Doppler effect at high speeds. The last symbol is used as a guard symbol for timing adjustments and for allowing vehicles to switch between transmission and reception across subframes. This format is depicted in FIG 5 which shows LTE-V2X (subframe) slot format for the PSSCH and PSCCH.

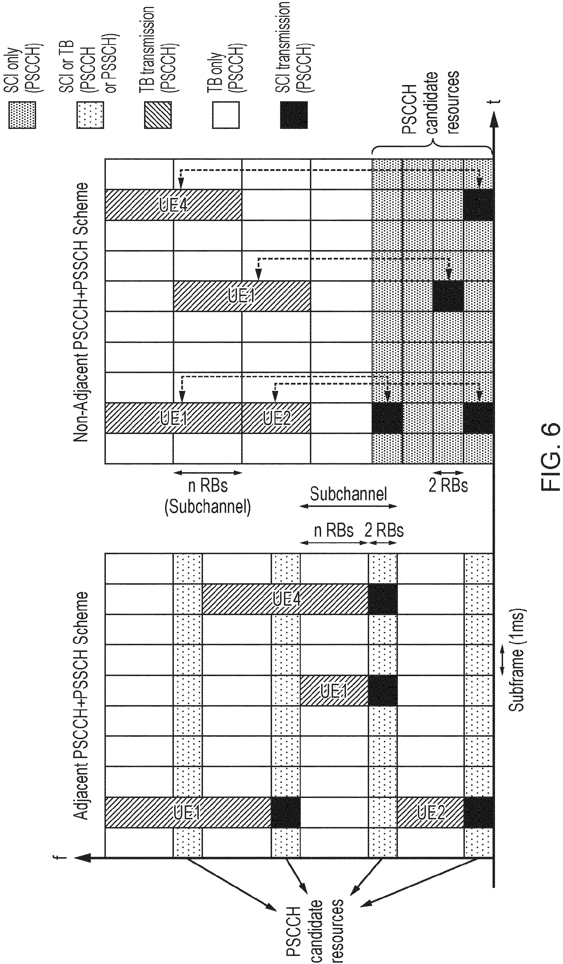

The RBs are grouped into sub-channels. A sub-channel can include RBs only within the same subframe. The number of RBs per sub-channel can vary and is (pre-) configured. Sub-channels are used to transmit data and control information. The data is organized in Transport Blocks (TBs) that are carried in the Physical Sidelink Shared Channel (PSSCH). A TB contains a full packet (e.g., a CAM or a BSM). A TB can occupy one or several subchannels depending on the size of the packet, the number of RBs per sub-channel, and the utilized Modulation and Coding Scheme (MCS). TBs can be transmitted using Quadrature Phase Shift Keying (QPSK), 16-quadrature amplitude modulation (QAM) or 64QAM modulations and turbo coding. Each TB has an associated Sidelink Control Information (SCI) message that is carried in the Physical Sidelink Control Channel (PSCCH). It is also referred to as Scheduling Assignment (SA). An SCI occupies 2 RBs and includes information such as: an indication of the RBs occupied by the associated TB; the MCS used for the TB; the priority of the message that is being transmitted; an indication of whether it is a first transmission or a blind retransmission of the TB; and the resource reservation interval. A blind retransmission refers to a scheduled retransmission or repetition of the TB (i.e., not based on feedback from the receiver). The resource reservation interval specifies when the vehicle will utilize the reserved sub-channel(s) to transmit its next TB. The SCI includes critical information for the correct reception of the TB. A TB cannot be decoded properly if the associated SCI is not received correctly. A TB and its associated SCI must be transmitted always in the same subframe. As depicted in FIG 6, which shows LTE-V2X channelization, with adjacent and non-adjacent PSCCH+PSSCH, the TB (PSSCH) and its associated SCI (PSCCH) can be transmitted in adjacent or non-adjacent sub-channels, where:

- Adjacent PSCCH + PSSCH: The SCI and TB are transmitted in adjacent RBs. For each SCI + TB transmission, the SCI occupies the first two RBs of the first subchannel utilized for the transmission. The TB is transmitted in the RBs following the SCI, and can occupy several subchannels (depending on its size). If it does so, it will also occupy the first two RBs of the following subchannels.
- Nonadjacent PSCCH + PSSCH: The RBs are divided into pools. One pool is dedicated to transmitting only SCIs, and the SCIs occupy two RBs. The second pool is reserved to transmit only TBs and is divided into subchannels.

To receive PSCCH, a UE has to monitor each defined pair of PRBs to determine whether PSCCH has been transmitted in them. Power control procedures for PSSCH and PSCCH are described in TS 36.213, sections 14.1.1.5 and 14.2.1.3, respectively. For sidelink transmission mode 4, the UE transmit power $P_{\text{PSSCH}}$ for PSSCH transmission

$$P_{\text{PSSCH}} = 10 \, log_{10} \left( \frac{M_{\text{PSSCH}}}{M_{\text{PSSCH}} + 10^{\frac{3}{10}} \times M_{\text{PSCCH}}} \right) + A \, [\text{dBm}]$$

in subframe $n$ is given by , and if higher layer parameter *maxTxpower* is configured, then

$$A = min \left\{ P_{\text{CMAX}}, P_{MAX\_CBR}, 10 \, log_{10} \left( M_{\text{PSSCH}} + 10^{\frac{3}{10}} \times M_{\text{PSCCH}} \right) + P_{\text{O\_PSSCH},4} + \alpha_{PSSCH,4} \right.$$

$$\left. \cdot PL \right\}$$

else

$$A = min \left\{ P_{\text{CMAX}}, 10 \, log_{10} \left( M_{\text{PSSCH}} + 10^{\frac{3}{10}} \times M_{\text{PSCCH}} \right) + P_{\text{O\_PSSCH},4} + \alpha_{PSSCH,4} \cdot PL \right\}$$

where $P_{\text{CMAX}}$ is defined in [TS 36.101], $M_{\text{PSSCH}}$ is the bandwidth of the PSSCH resource assignment expressed in number of resource blocks, $M_{\text{PSCCH}} = 2$, and $PL = PL_c$ where $PL_c$ is defined in TS 36.213 Clause 5.1.1.1. $P_{\text{O\_PSSCH},4}$ and $\alpha_{PSSCH,4}$ are provided by higher layer parameters *poSL-V2V* and *alphaSL-V2V*, respectively and that are associated with the corresponding PSSCH resource configuration.

For sidelink transmission mode 4, the UE transmit power $P_{\text{PSCCH}}$ for PSCCH transmission in subframe $n$ is given by

$$P_{\text{PSCCH}} = 10 \, log_{10} \left( \frac{10^{\frac{3}{10}} \times M_{\text{PSCCH}}}{M_{\text{PSSCH}} + 10^{\frac{3}{10}} \times M_{\text{PSCCH}}} \right) + B \, [\text{dBm}],$$

and if higher layer parameter maxTxpower is configured, then

$$= min\left\{P_{\mathrm{CMAX}}, P_{MAX\_CBR}, 10\,log_{10}\left(M_{\mathrm{PSSCH}} + 10^{\frac{3}{10}} \times M_{\mathrm{PSCCH}}\right) + P_{\mathrm{O\_PSSCH},4} + \alpha_{PSSCH,4}\right.$$

$$\left. \cdot\, PL \right\}$$

else

$$B = min\left\{P_{\mathrm{CMAX}}, 10\,log_{10}\left(M_{\mathrm{PSSCH}} + 10^{\frac{3}{10}} \times M_{\mathrm{PSCCH}}\right) + P_{\mathrm{O\_PSSCH},4} + \alpha_{PSSCH,4} \cdot PL\right\}$$

where $P_{\mathrm{CMAX}}$ is defined in [6], $M_{\mathrm{PSSCH}}$ is the bandwidth of the PSSCH resource assignment expressed in number of resource block, $M_{\mathrm{PSCCH}} = 2$, and $PL = PL_c$ where $PL_c$ is defined in Clause 5.1.1.1. $P_{\mathrm{O\_PSSCH},4}$ and $\alpha_{PSSCH,4}$ are provided by higher layer parameters poSL-V2V and alphaSL-V2V, respectively and that are associated with the corresponding PSSCH resource configuration. $P_{MAX\_CBR}$ is set to a maxTxpower value based on the priority level of the PSSCH and the channel busy ratio (CBR) range which includes the CBR measured in subframe n-4. The difference in power level between PSSCH and PSCCH can then be calculated to be:

$$P_{\mathrm{PSCCH}} - P_{\mathrm{PSSCH}} = 10\,log_{10}\left(\frac{10^{\frac{3}{10}} \times M_{\mathrm{PSCCH}}}{M_{\mathrm{PSSCH}}}\right) = 3 + 10\,log_{10}\left(\frac{M_{\mathrm{PSCCH}}}{M_{\mathrm{PSSCH}}}\right)$$

This means that the power spectral density (PSD), i.e. the signal's power content versus frequency, of PSCCH is boosted by 3 dB compared to the PSD of its corresponding PSSCH.

NR-V2X overview

*Overview*

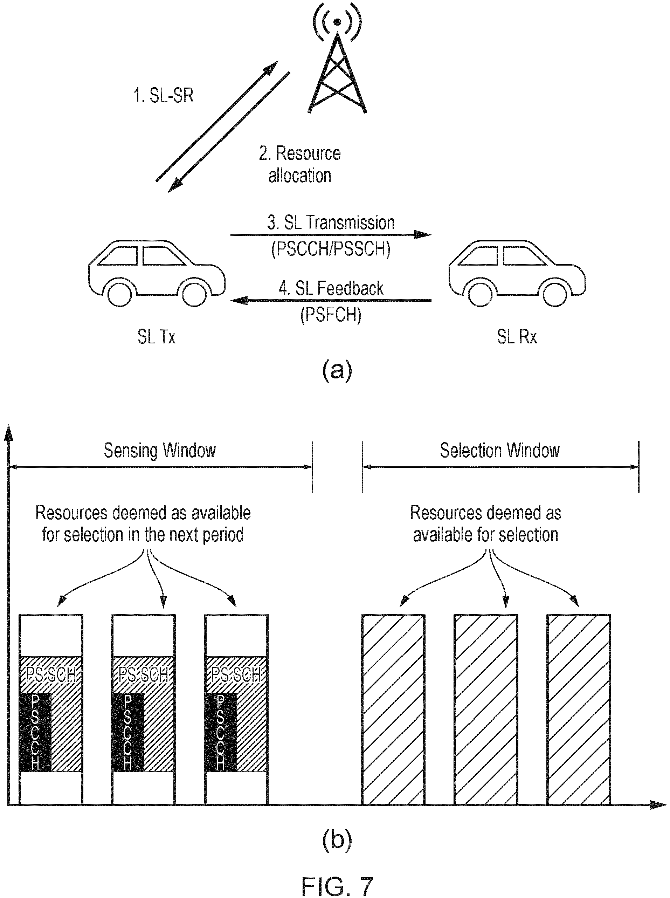

During 3GPP Rel-16, NR sidelink (SL) has been designed to facilitate a user equipment (UE) to communicate with other nearby UE(s) via direct/SL communication. Two resource allocation modes have been specified, and a SL transmitter (TX) UE is configured with one of them to perform its NR SL transmissions. These modes are denoted as NR SL mode 1 and NR SL mode 2. In mode 1, a sidelink transmission resource is assigned (scheduled) by the network (NW) to the SL TX UE, while a SL TX UE in mode 2 autonomously selects its SL transmission resources. In mode 1, where the next generation node B (gNB) is responsible for the SL resource allocation, the configuration and operation is similar to the one over the Uu interface (which is depicted in FIG 7 which shows NR SL resource allocation modes: (a) Mode 1; (b) Mode 2). The MAC level details of this procedure are given in section 5.8.3 of 38.321. In mode 2, the SL UEs perform autonomously the resource selection with the aid of a sensing procedure. More specifically, a SL TX UE in NR SL mode 2 first performs a sensing procedure over the configured SL transmission resource pool(s), in order to obtain the knowledge of the reserved resource(s) by other nearby SL TX UE(s). Based on the knowledge obtained from sensing, the SL TX UE may select resource(s) from the available SL resources, accordingly. In order for a SL UE to perform sensing and obtain the necessary information to receive a SL transmission, it needs to decode the sidelink control information (SCI). In release 16, the SCI associated with a data transmission includes a ist-stage SCI and 2nd-stage SCI, and their contents are standardized in 3GPP TS 38.212.

*Sidelink Control Information (SCI)*

The SCI follows a 2-stage SCI structure, whose main motivation is to support the size difference between the SCIs for various NR-V2X SL service types (e.g., broadcast, groupcast and unicast). The ist-stage SCI, SCI format 1-A, carried by PSCCH and contains: information to enable sensing operations; information needed to determine resource allocation of the PSSCH and to decode 2nd-stage SCI.

The 2nd-stage SCI, SCI format 2-A and 2-B, carried by PSSCH (multiplexed with SL-SCH) and contains: Source and destination identities; information to identify and decode the associated SL-SCH TB; control of Hybrid automatic repeat request (HARQ) feedback in unicast/groupcast; trigger for CSI feedback in unicast.

*SL physical layer structure*

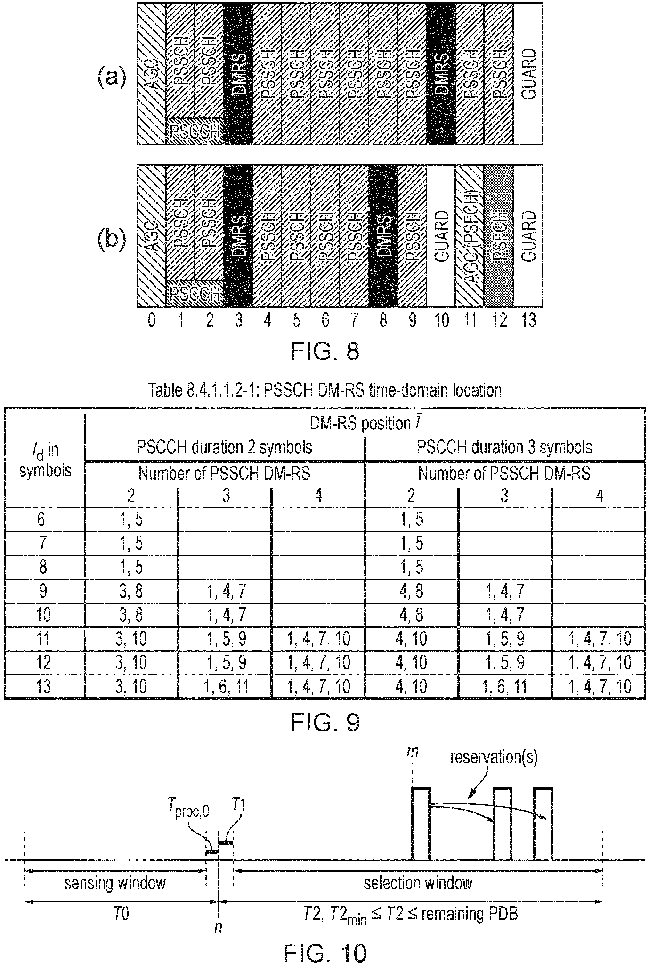

The configuration of the resources in the sidelink resource pool defines the minimum information required for a RX UE to be able to decode a transmission, which includes the number of sub-channels, the number of PRBs per sub-channels, the number of symbols in the PSCCH, which slots have a PSFCH and other configuration aspects not relevant to this invention. However, the details of the actual sidelink transmission (i.e., the payload) is provided in the PSCCH (ist-stage SCI) for each individual transmission, which includes: The time and frequency resources, the demodulation reference signal (DMRS) configuration of the PSSCH, the Modulation and coding scheme (MCS), PSFCH, among others. An example of the SL slot structure is depicted in FIG. 8 which shows SL slot format: (a) slot with PSCCH/PSSCH; (b) slot with PSCCH/PSSCH and PSFCH, where it is shown a slot with PSCCH/PSSCH and a slot with PSCCH/PSSCH where the last symbols are used for PSFCH. The configuration of the PSCCH (e.g., DMRS, MCS, number of symbols used) is part of the resource pool configuration. Furthermore, the indication of which slots have PSFCH symbols is also part of the resource pool configuration. However, the configuration of the PSSCH (e.g., the number of symbols used, the DMRS pattern and the MCS) is provided by the ist-stage SCI which is the payload sent within the PSCCH and follows the configuration depicted in FIG. 9 which shows PSSCH DMRS configurations based on the number of used symbols and duration of the PSCCH [TS 38.211]. It should be noted that in NR V2X, a TX UE transmits PSSCH and PSCCH with the same power spectral density (i.e., with the same power over a PRB) in all symbols with PSCCH, PSSCH or PSCCH/PSSCH.

*HARQ procedure*

The PSFCH was introduced during Rel-16 to enable HARQ feedback over the sidelink from a UE that is the intended recipient of a PSSCH transmission (i.e., the RX UE) to the UE that performed the transmission (i.e., the TX UE). Within a PSFCH, a Zadoff-Chu sequence in one PRB is repeated over two OFDM symbols, the first of which can be used for automatic gain control (AGC), near the end of the sidelink resource in a slot. An example slot format of PSCCH, PSSCH, and PSFCH is provided in FIG 9b. The Zadoff-Chu sequence as base sequence is (pre-)configured per sidelink resource pool. The time resources for PSFCH are (pre-)configured to occur once every 1, 2, or 4 slots. The HARQ feedback resource (PSFCH) is derived from the resource location of PSCCH/PSSCH.

*Resource allocation mode 2 details*

In mode 2 SL, each UE autonomously selects resources by decoding physical sidelink control channel (PSCCH) (or sidelink control information (SCI)) and performing RSRP measurement of (pre-)configured resource pool(s) based on a procedure specified in [3GPP 38.214 Sec 8.1] on a candidate resource pool during a sensing window interval. The different phases of this procedure in the time domain are depicted in FIG. 10 which shows time domain phases of the NR SL mode 2 sensing based resource selection procedure. Where n identifies the slot where the resource selection is anchored, the sensing window is defined as $[n-T_o, n-T_{proc,o}]$, $T_o$ defines the number of slots corresponding to sl-SensingWindow parameter, $T_{proc,o}$ value is standardized and depends on the sub-carrier spacing, $T_1$ is based on UE implementation and is upper bounded by $T_{proc,1}$ value that is standardized and depends on the sub-carrier spacing, T2 is the selection window and is upperbounded by the remaining Packet Delay Budget (PDB) and m is the selected resource.

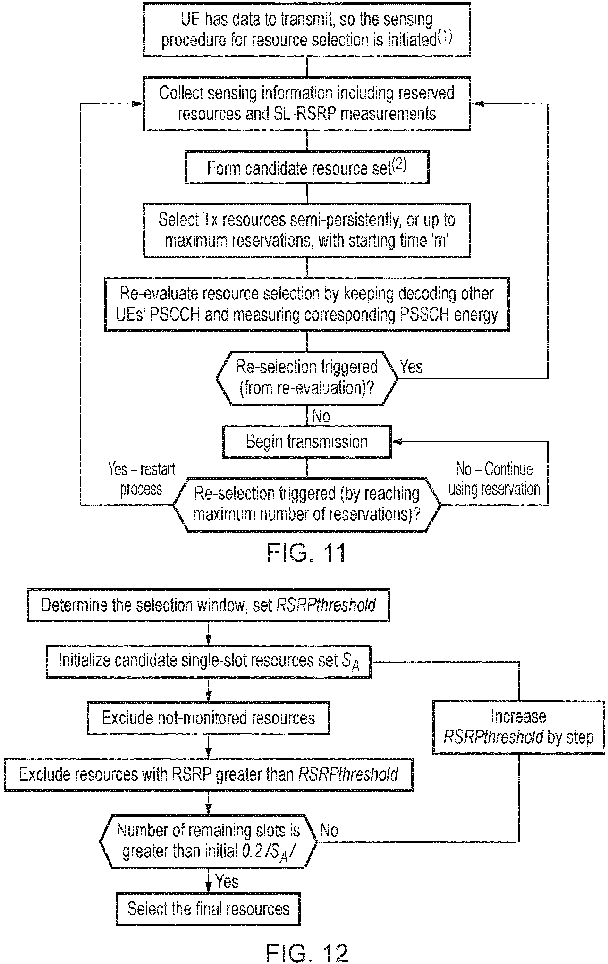

The procedure is depicted in FIG. 11 which shows an SL Mode 2 resource allocation scheme, including re-evaluation, where the following elements are of note: The monitoring of the resource pool and acquisition of information to be used during the resource selection procedure can be done prior to the Tx UE knowing that it has a transmission to perform; After the Tx UE has acquired enough information from its monitoring of the resource pool it can form the candidate resource set.

The formation of the resource candidate set is depicted in FIG. 12, which occurs for resources within a candidate resource pool, which have been monitored during a sensing window interval. During this sensing window interval, the UE collects the set of $S_A$ of potential candidate resource slots that are within a defined selection window period and excludes all resources/slots which: The UE has not monitored them during the sensing period (e.g. due to own transmission or other activities including discontinuous receive (DRX)); The decoded SCI format 1-A indicates that the candidate slot is reserved and the corresponding measured RSRP is above a pre-configured *RSRPthreshold.* If the number of remaining single slot candidates are greater than $|X. S_A|$ (where X = 0.2, 0.35, 0.5), the UE forwards the potential candidate slots to the higher for final resource selection. Otherwise it increases the *RSRPthreshold* by a step (i.e. *RSRPthreshold = RSRPthreshold + step*, where the step per the TS 38.214 spec is currently defined to be 3 dB) and repeats the procedure. Final candidate slots are then forwarded to higher layers for final resource selection.

*Resource re-evaluation and pre-emption mechanism*

The resource re-evaluation mechanism refers to the sensing UE after selecting the resource at time m (as depicted in FIG. 10) continue to monitor the resource pool for any incoming SCIs that can invalidate the use of the selected resource at time m. Specifically, shortly before transmitting in a selected resource, a sensing UE re-evaluates the set of resources from which it can select. This is done to check whether its selected resource at time m is still suitable, taking into account of late-arriving SCIs due, typically, to an aperiodic higher-priority service starting to transmit after the end of the original sensing window.

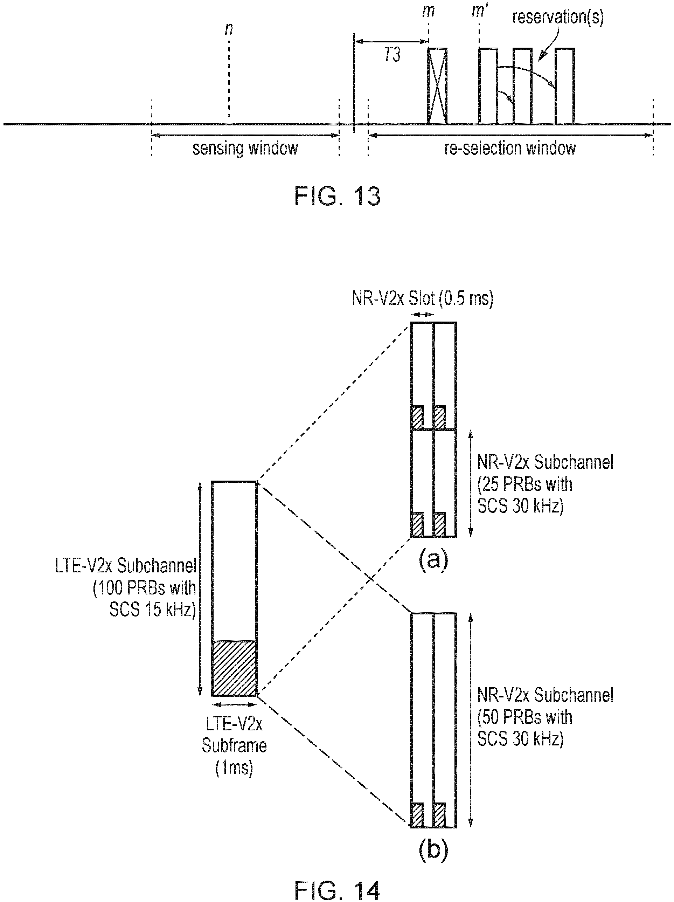

The time domain constraints of the resource re-evaluation mechanism are depicted in FIG. 13 which shows resource re-evaluation time constraints, where $T_3$ denotes the time before the occurrence of the selected resource after which the sensing UE can commit to the transmission in the selected resource. The cut-off time $T_3$ is long enough before transmission to allow the UE to perform the calculations related to resource re-selection. In the resource pre-emption mechanism, a sensing UE triggers the reselection of already signalled resource(s) as a resource reservation in case of detection of overlap with resource(s) of a higher priority reservation from a different UE and, SL-Reference Signal Received Power (RSRP) measurement associated with the resource reserved by that different UE is larger than an associated SL-RSRP threshold. Note that only the overlapped resources are reselected. The application of pre-emption can apply between all priorities of data traffic, or only when the priority of the pre-empting traffic is higher than a threshold and higher than that of the pre-empted traffic. Furthermore, a UE does not need to consider the possibility of pre-emption later than time $T_3$ before the particular slot containing the reserved resources. Finally, this his mechanism can be enabled or disabled, per resource pool.

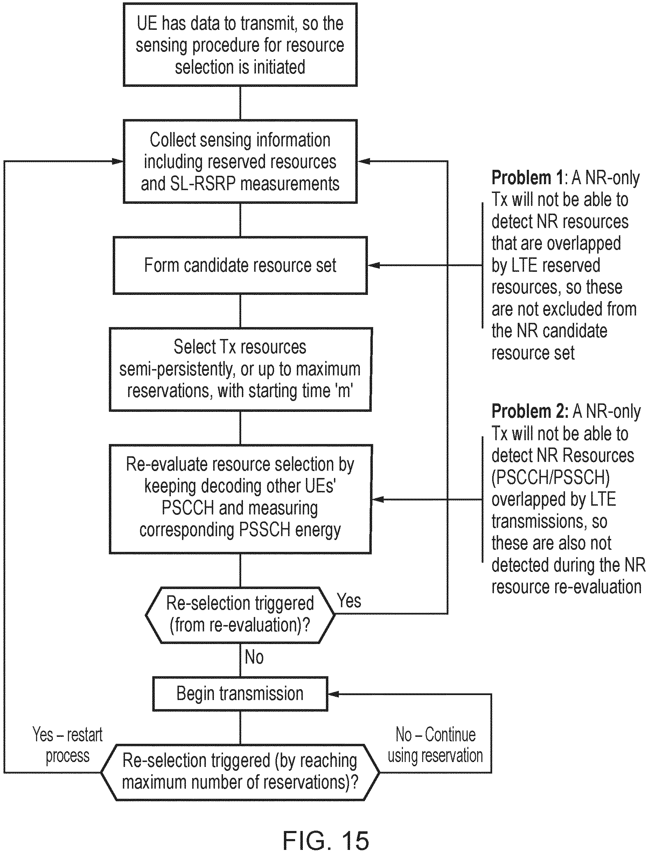

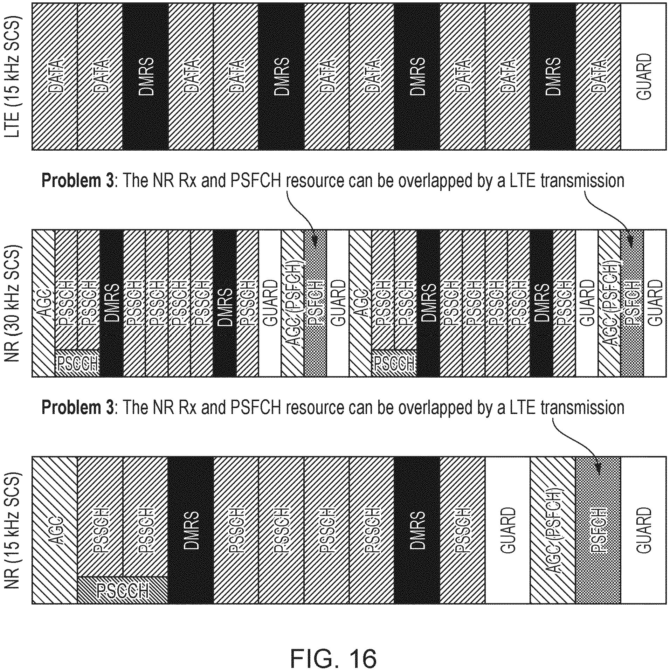

In order to support a V2X deployment scenario where both LTE-V2x and NR-V2x devices are to coexist in the same frequency channel (other shared resource arrangements using other RATs are possible), it is desirable that the device can identify transmission by other devices in both LTE-V2x and NR-V2x to detect potential other devices using different V2X RAT (e.g. LTE-V2x or NR-V2x) in the shared resource pools as seen in the example depicted in FIG. 14 which shows an example of an LTE-V2X resource pool overlapping with an NR-V2X resource pool: (a) NR-V2X resource pool with subchannels consisting of 25 PRBs; (b) NR-V2X resource pool with subchannels consisting of 50 PRBs. Thus, the NR device has to monitor the two overlapping resource pools and decode both the LTE SCIs transmitted in the LTE-V2X resource pool and the NR SCIs transmitted in the NR-V2X resource pool to identify future transmissions by other surrounding devices. However, an NR-only device (i.e. a device without an LTE module) will not be able to decode LTE SCI to identify (future) transmission from LTE-V2x device(s). From the NR-only Tx side, this will introduce two difficulties regarding the NR SL Mode 2 resource allocation procedure, which are highlighted in FIG. 15 which shows introduced problems at the NR Tx side for not being able to decode LTE SCIs, as follows: 1) An NR-only Tx will not be able to detect NR resources that are overlapped by LTE reserved resources, so these will not be excluded from the NR candidate resource set; 2) An NR-only Tx will not be able to detect NR Resources (PSCCH/PSSCH) overlapped by LTE transmissions, so these are also not detected during the NR resource re-evaluation. From the NR-only Rx side, this will introduce a further difficulty regarding the transmission of the HARQ feedback in a PSFCH resource, as depicted in FIG 16, which shows an example of LTE transmission overlapping an NR slot. When NR uses sub-carrier spacing of 30 kHz, then two NR sidelink slots will be overlapped by an LTE sub-frame, while when NR uses sub-carrier spacing of 15 kHz a single NR sidelink slot will be overlapped by an LTE sub-frame. However, this introduces the further difficulty 3) that the NR-only Rx is not able to detect if a PSFCH resource is going to be overlapped by an LTE transmission.

The impact of these difficulties is that the reception of both the NR and LTE transmission can be impacted. However, if an NR-only Tx and Rx UEs is given the tools to address the difficulties 2) and 3) this will enable the NR-only device to avoid impact the LTE operation. Therefore, in some example embodiments, difficulties 2) and 3) are addressed. Namely, the question on how to allow the NR-only device to detect whether there is an ongoing LTE SL transmission on NR selected resources within a short interval so as to avoid using the selected resources for NR SL transmission is addressed. It will be appreciated that some example embodiments are applicable to RATs other than LTE and NR which also use shared resources.

The resource re-selection mechanism described above is based on the detection and decoding of NR SCIs. The same mechanism can in principle be extended to the scenario where the LTE and NR sidelink resource pools overlap each other. However, for an NR device to perform resource re-selection based on the pre-emption from an LTE transmission then the NR device will have to be able to decode the LTE SCIs. Therefore, in the situation of NR-only devices (or other single-RAT devices which share resources with another RAT) the existing resource re-selection mechanism is not applicable.

Detection Mechanism

Some example embodiments provide an NR-only (or other single RAT) device or network node which applies a mechanism that enables it to detect based on the sampling of few first symbols in an NR sidelink slot if there is an overlapping LTE V2x transmission (or other RAT transmission) taking place. More generally, some example embodiments provide a technique where a device uses a first RAT receiver to detect whether transmissions are occurring from devices using a second RAT.

This mechanism is then used to enable one or more of the following behaviours at a time scale of an NR slot (or other RAT time interval):

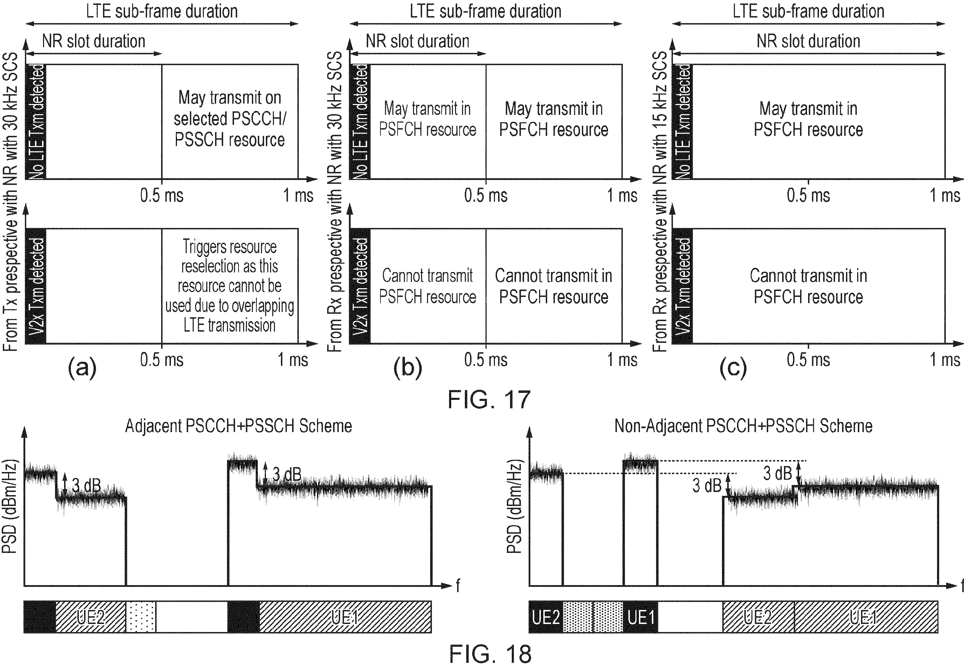

- From an NR-only Tx UE perspective, when an LTE overlapping transmission is detected, trigger a resource reselection. The enabled behaviour is depicted in FIG. 17(a). This is typically only applicable if the NR sidelink uses a SCS of 30 kHz and the LTE sidelink uses a SCS of 15 kHz;
- From an NR-only Rx UE perspective, when an LTE overlapping transmission is detected, stop the transmission in the PSFCH resource overlapped by the LTE transmission. The enabled behaviour is depicted in FIGS. 17(b) and (c). This is typically applicable in the case where the NR sidelink uses 30 kHz and 15 kHz SCS.

FIG. 17 shows an example NR-only UE behaviour when using the detection mechanism: (a) NR-only Tx enabled behaviour; (b) NR-only Rx enabled behaviour with 30 kHz SCS; and (c) NR-only Rx enabled behaviour with 15 kHz SCS.

In the network (NW) where a NR sidelink UE is allowed to operate in co-channel coexistence with LTE V2x - with a scheme as illustrated in FIG. 3 - the UE needs to be configured with means on how the UE should utilize the shared resources with LTE V2x devices.

The main steps of this approach are:

- An NR-only (or first RAT) UE will perform a short-term re-evaluation of whether there is LTE V2x (or second RAT) transmission ongoing shortly before its transmission at the same slot and applies any of the below methods independently or combined.

   ◦ Check for 3dB or other threshold amount of PSD difference between LTE V2x PSCCH and PSSCH - this power variation in the received signal provides an indication to the UE that the monitored NR (or first RAT) resources are already being used by other devices performing LTE (or second RAT) transmission: The NR V2x UE may use the first few symbols of the slot for sampling and fast Fourier transform (FFT) processing of the received signals to estimate the PSD to evaluate whether the characteristics of the frequency spectrum of the received signal corresponds to LTE V2X transmission. This requires sampling over at least one LTE symbol time which is 2 NR symbols of 30kHz SCS. In other words, the UE monitors signals using a first RAT receiver to detect whether power variations in those signals indicative of transmissions using a second RAT are occurring.
   ◦ Check for the characteristic of the slot - this variation in the characteristics of the slot provides an indication to the UE that the monitored NR (or first RAT) resources are already being used by other devices performing LTE (or second RAT) transmission: The NR V2x UE may evaluate the received signal during the first two NR symbols. In case of NR-only transmission, there will be perfect match between the received signals due to the duplicated AGC in first symbol from second symbol (assuming that adjustment of AGC during the reception of the first V2X symbol has not introduced significant difference), while detected signal above noise floor but without any correlation between the first and second NR symbols may indicate LTE transmission. In other words, the UE monitors signals using a first RAT receiver to detect whether there is an unexpected mismatch in those signals which indicates that transmissions using a second RAT are occurring.
   ◦ Check for the characteristic of the slot: NR (or first RAT) V2x UE does not transmit during NR guard symbols. Hence, the received signal show significant decrease in received power at the corresponding symbol(s) if there are no LTE (or second RAT) transmissions. Thus, if NR V2x is applying 30 kHz SCS this reduction in power is observed, whereas the power is almost constant power in case of LTE transmission. In other words, the UE monitors signals using a first RAT receiver to detect whether there are transmissions at unexpected times which indicates that transmissions using a second RAT are occurring.

- In the case that LTE (or second RAT) transmission is detected, the UE knows the LTE V2x transmission will last for at least the remaining LTE (or second RAT) subframe, i.e. 1ms. More generally, when the UE (using the first RAT receiver) detects that second RAT transmissions are occurring, the UE can assume that those second RAT transmission will continue for at least the second RAT transmission time interval and so transmissions within that second transmission time interval should be avoided.
- In the case that NR (or first RAT) transmission is detected, the UE knows the NR V2x transmission will last for at least the remaining NR slot (or first RAT transmission time interval), which may be 1ms (SCS 15KHz), 0.5ms (SCS 30kHz), or 0.25 ms (SCS 60kHz) in FRi.
- Depending on when the detection is concluded - which may be down to 1 LTE symbol (or second RAT symbol) depending on UE HW implementation - the UE may decide whether it can transmit in the remaining symbols of same slot and the next NR slot(s) (for SCS ≥ 30 kHz).

◦ If LTE (or second RAT) transmission is detected the NR (or first RAT) UE should not transmit during this slot. In the case that NR V2x is using SCS ≥ 30 kHz this decision applies to two NR slots (or first RAT transmission time intervals) for SCS 30kHz or 4 NR slots for SCS 60kHz.
◦ If NR V2x transmission is detected, an RX UE can transmit its HARQ feedback on PSFCH in the slot. Since PSFCH and its corresponding duplicate for AGC are transmitted after the last PSSCH, i.e. later in the slot (typically 11th and 12th symbols) there is sufficient time for the UE to make its evaluation and still be able to transmit PSFCH in the same slot.

In summary:

- The NR-only (or first RAT) UE performs a short term (re)-evaluation of whether SL transmission is ongoing in current slot; the behavior comprising
- selecting a slot for a SL transmission using a first RAT (NR) wherein resources of the slot may be used for a SL transmission by a UE using either the first RAT or a second RAT (LTE) and wherein the SL transmission using the second RAT occupies at least a first portion of the slot, the first portion of the slot starts from the beginning of the slot, and the SL transmission using the first RAT occupies a part of a second portion of the slot, the second portion of the slot follows the first portion of the slot;
- detecting in the first portion of the slot whether there is an ongoing SL transmission using the second RAT based on detecting at least one characteristic of at least one of the first RAT and the second RAT;
- transmitting or refraining from transmitting the SL transmission using the first RAT in the second portion of the slot based on outcome of the detecting.

LTE (or second RAT) transmission detection

Some example embodiments make use of detectable differences between LTE V2x (or second RAT) and NR V2x (or first RAT), e.g. slot formats and Tx power profiles as described below for enabling and facilitating the detection of whether there is an ongoing LTE transmission on selected resources for the NR-only device. In other words, the UE utilises measurable differences (of example transmission time interval formats and power profiles) of signals received using a first RAT receiver to detect the presence of second RAT transmissions:

- While LTE V2x (or second RAT) is using 15kHz SCS and scheduling is based on subframes of 1ms, the NR V2x (or first RAT) is expected to use 30 kHz (or higher), i.e. slots of 0.5 ms, as shown in FIG. 14. However, usage of SCS 15kHz for NR is not prohibited either. Assuming SCS 30kHz, if LTE (or second RAT) transmission is detected/not detected in the beginning of an LTE slot, the conclusion is applicable to the rest of the same NR slot (or first RAT transmission time interval) as well as the next slot (or next 3 slots in NR SCS 60kHz).
- In an LTE (or second RAT) sidelink transmission, PSCCH is transmitted in FDM with PSSCH in the same subframe, with 3dB higher PSD compared to PSSCH, resulting in a characteristic step shape of the received signal PSD, while the PSD is flat for NR (or first RAT) sidelink transmission. An example illustrating the characteristic of LTE PSD is illustrated in FIG. 18 for adjacent and non-adjacent PSCCH+PSSCH. FIG. 18 shows an example of LTE-V2X PSD measured over one subframe for adjacent and non-adjacent PSCCH+PSSCH.
- In an NR slot (or first RAT transmission time interval) the second OFDM symbol is duplicated to the first symbol for usage in AGC, i.e. the first two symbols are 100% identical. If those two symbols are not identical then this indicates that second RAT transmissions are also occurring.
- In an NR slot (or first RAT transmission time interval) the symbol after the last PSSCH symbol is used as a guard symbol. Any remaining SL symbols can be used for PSFCH or for a further guard symbol. If those guard symbols contain transmission then this indicates that second RAT transmissions are occurring.

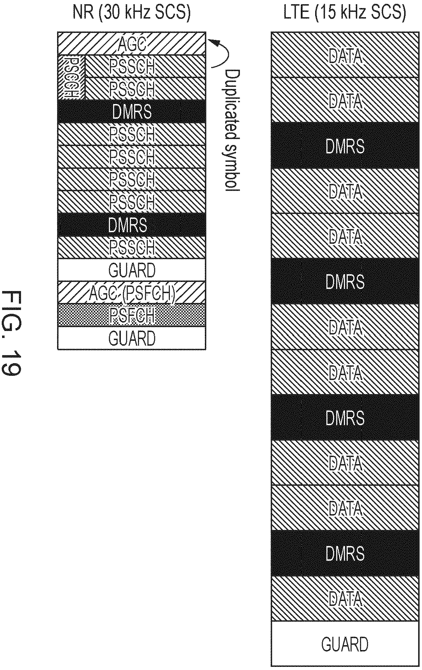

An example comparison of LTE V2x and NR V2x slots is illustrated in FIG. 19 with assumption of SCS 30 kHz in NR. FIG. 19 shows an example of an LTE SL slot format together with an NR SL slot format with PSCCH/PSSCH and PSFCH. As can be seen, the NR duplicated symbols can coincide with LTE data which will make them no longer identical and the NR guard symbols can also coincide with LTE data and so the LTE transmissions can be detected during those otherwise null guard symbols. It should be noted that it is assumed that the NR V2x device is aware of information from LTE-V2x devices in its vicinity such that it can map an LTE-V2x device's frame/subframe start to its own timing and the slot boundaries are aligned.

Example Methodology

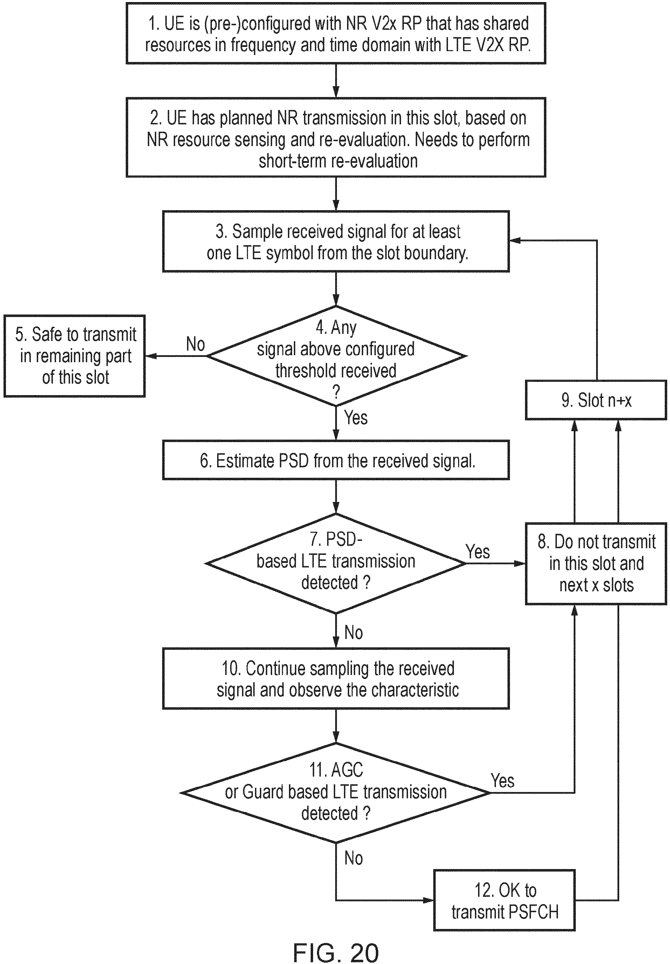

The detailed procedure followed by the UE of an example embodiment is illustrated in FIG. 20 and the corresponding steps are described below:

- At Step 1: An NR-only (or first RAT) UE is (pre-)configured with NR V2x RP that has shared resources in frequency and time domain with LTE V2X RP (or transmissions using a second RAT). Processing proceeds to Step 2.
  ◦ The configuration may be provided in SIB12 or via an RRC configuration message such as, for example, in sl-ConfigDedicatedNR within RRCReconfiguration.
- At Step 2: The UE has a planned NR transmission based on a NR resource selection procedure and needs to evaluate the presence of any LTE transmissions upon its transmission time. More generally, a network node has a first RAT transmission and needs to evaluate the presence of any second RAT transmissions using the shared resources. Processing proceeds to Step 3.
- At Step 3: The UE (re)evaluates the received signal during the first one or more NR symbols - which correspond to one LTE symbol. Processing proceeds to Step 4.
- At Steps 4 & 5: If the measured received signal is not above the noise floor - or a configured minimum received signal level - the UE concludes that there is no NR or LTE V2x transmission during this slot. Thus, at step 5, the UE can use the remaining part of this slot for NR V2x transmission because the shared resources are not currently being used. Processing returns to Step 3.
- At Steps 4 & 6: If the measured received signal is above the noise floor - or the configured minimum received signal level - then, at step 6, the UE applies FFT to the collected samples during the at least 2 NR symbols and estimates the PSD of the received signal.

  ◦ Whether the PSD estimate is possible based on the time samples collected or whether more time is needed is dependent on the UE implementation. It is expected that a typical NR UE is able to sample with a minimum rate of 30.72 MHz and has an FFT size of 2048, hence, would be perfectly capable of estimating PSD within few microseconds.
  ◦ The power spectral density for an LTE-V2x transmission would reveal LTE V2x transmissions having the characteristic shown in as FIG. 18.

    ▪ As seen in the FIG. 18 it is easier to identify the 3dB boos in adjacent compared to non-adjacent PSCCH-PSSCH transmissions. The latter has, however, low practical interest and not used in known current deployments.
    ▪ In case of NR V2x coexistence with an LTE pool configured with non-adjacent PSCCH-PSSCH, it may be necessary to, for example, not allow NR transmission in the LTE PDCCH pool. In this case, LTE V2x detection will be more trivial, as then any power measured above the noise floor indicates presence of LTE PDCCH and, hence, LTE TX in the full subframe. Processing proceeds to Step 7.

- At Steps 7 - 8 - 9: In case the generated PSD indicates detection of LTE transmission with sufficient confidence, the UE will not transmit in this slot and will continue evaluation (back to Step 3) in the next slot.

  ◦ If NR V2x is using SCS ≥ 30 kHz this decision applies to two NR slots for SCS 30kHz or 4 NR slots for SCS 60kHz. In that case the UE will not transmit for two or four slots before it makes new evaluation. Thus 'X' in step 9 may be 1, 2 or 3 depending on SCS.
  ◦ If no LTE transmissions are detected with sufficient confidence, then processing proceeds to step 10.

- At Step 10: If the detection of LTE V2x transmission is not sufficiently reliable, the UE further evaluates the received signal according to NR slot format. In this example embodiment, this step requires two NR symbol for one approach and further NR symbols for further approaches - however, it will be appreciated that other approaches can be used based on the slot formats of the first and second RATs.

  ▪ In case of NR V2x the first two symbols will be completely identical due to the duplication of second symbol to the first symbol for AGC. Similar observation will not show perfect match (duplication or any correlation) if there is LTE V2x transmission.
  ▪ Another observation, which is applicable if NR applies SCS ≥ 30 kHz and requires reception and evaluation of more symbols, is to identify the guard symbols in NR V2x which will be at the last symbol of an NR slot and even earlier in case of PSFCH. NR transmission will show RX power reduction at guard symbols while LTE transmission should show almost constant power level. Processing proceeds to Step 11.

- At Step 11- 8 - 9: If further (re)evaluation of the received signal indicates LTE V2x based on the recognized slot format, the UE will not transmit in this slot and will continue evaluation (back to step 3) in next slot.
  ○ If NR V2x is using SCS ≥ 30 kHz this decision applies to two NR slots for SCS 30kHz or 4 NR slots for SCS 60kHz. In that case the UE will not transmit for two or four slots before it makes new evaluation. Thus 'X' in step 9 may be 1, 2 or 3 depending on SCS.
- At Step 11-12: Should the further4 (re)evaluation indicate NR V2x, an RX UE can transmit HARQ feedback at the PSFCH symbol. Processing returns to Step 3.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Although embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. An apparatus, comprising:
   means for detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver is at least one of:

matching a characteristic of a second radio access technology transmission, and

failing to match a characteristic of said first radio access technology transmission; and

further comprising means for determining whether to transmit in a second portion of said transmission time interval using a first radio access technology transmitter based on said detecting by said means for detecting.

2. The apparatus of claim 1, wherein said transmission time interval comprises a subframe and said means for detecting uses said first radio access technology receiver to monitor for transmissions occurring within said subframe.

3. The apparatus of claim 1 or 2, wherein said first portion comprises at least one of:

at least a period suitable to carry a second radio access technology symbol;

at least a period following a boundary of said transmission time interval suitable to carry said second radio access technology symbol; and

at least a period suitable to carry at least one said second radio access technology symbol.

4. The apparatus of any preceding claim, wherein said means for detecting detects that no transmissions are occurring when no signal above a noise threshold is detected within said first portion.

5. The apparatus of any preceding claim, wherein said characteristic of said second radio access technology transmission comprises a power spectral density profile of transmissions by said second radio access technology.

6. The apparatus of any preceding claim, wherein said means for detecting detects that a transmission other than said first radio access technology transmission is occurring when a power spectral density profile of said transmission detected within said first portion matches a power spectral density profile of transmissions by said second radio access technology, and preferably wherein said power spectral density profile of transmissions by said second radio access technology steps between a higher power spectral density and a lower power spectral density, and preferably wherein said higher power spectral density and said lower power spectral density vary by around 3dB.

7. The apparatus of any preceding claim, wherein said characteristic of said first radio access technology transmission comprises at least one of:

an absence of transmissions over noise during at least one period within said first portion corresponding to at least one guard period of said transmission time interval;

a received signal strength below a threshold during said at least one period within said first portion corresponding to at least one guard period of said transmission time interval;

received transmissions which decode as duplicated symbols within said transmission time interval; and

received transmissions which decode as first radio access technology duplicated symbols within said transmission time interval.

8. The apparatus of any preceding claim, wherein said means for detecting detects that a transmission other than said first radio access technology transmission is occurring when at least one of:

a transmission is detected during at least one period within said first portion corresponding to at least one guard period of said transmission time interval;

a received signal strength is above a threshold during said at least one period within said first portion corresponding to said at least one guard period of said transmission time interval;

received transmissions detected by said first radio access technology receiver decode as other than expected duplicated symbols; and

received transmissions detected by said first radio access technology receiver decode as other than expected first radio access technology duplicated symbols.

9. The apparatus of any preceding claim, wherein said means for determining transmits within said second portion of said transmission time interval using said first radio access technology transmitter when said means for detecting detects that no transmissions other than first radio access technology transmissions are occurring.

10. The apparatus of any preceding claim, wherein said means for determining determines that no transmissions can be performed in said second portion of said transmission time interval using said first radio access technology transmitter when said means for detecting detects that transmissions other than first radio access technology transmissions are occurring.

11. The apparatus of any preceding claim, wherein said means for determining postpones transmissions for a postponement period comprising at least said second portion of said transmission time interval using said first radio access technology transmitter when said detecting detects that transmissions are occurring, and preferably wherein said postponement period comprises at least a plurality of technology transmission time intervals.

12. The apparatus of claim 11, wherein said means for determining selects said postponement period based on a configured subcarrier spacing of said first radio access technology, and preferably wherein said means for detecting reperforms said detecting upon expiry of said postponement period.

13. The apparatus of any preceding claim, wherein said first radio access technology comprises New Radio and preferably wherein said second radio access technology comprises Long Term Evolution.

14. The apparatus of claim 12 or 13 when dependent on claim 12, wherein each Long Term Evolution subframe coincides with a plurality of New Radio slots.

15. The apparatus of any preceding claim wherein the means comprise: at least one processor; and at least one memory storing instructions that, when executed by the at least one processor, cause performance of the apparatus.

16. A method, comprising:
detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver is at least one of:

matching a characteristic of a second radio access technology transmission, and
failing to match a characteristic of said first radio access technology transmission; and

determining whether to transmit in a second portion of said transmission time interval using a first radio access technology transmitter based on said detecting.

**Amended claims in accordance with Rule 137(2) EPC.**

1. An apparatus, comprising:

means for detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver matches a characteristic of a second radio access technology transmission, and
further comprising means for determining whether to transmit in a second portion of said transmission time interval using a first radio access technology transmitter based on said detecting by said means for detecting.

2. The apparatus of claim 1, wherein said transmission time interval comprises a subframe and said means for detecting uses said first radio access technology receiver to monitor for transmissions occurring within said subframe.

3. The apparatus of claim 1 or 2, wherein said first portion comprises at least one of:

at least a period suitable to carry a second radio access technology symbol;
at least a period following a boundary of said transmission time interval suitable to carry said second radio access technology symbol; and
at least a period suitable to carry at least one said second radio access technology symbol.

4. The apparatus of any preceding claim, wherein said means for detecting detects that no transmissions are occurring when no signal above a noise threshold is detected within said first portion.

**5.** The apparatus of any preceding claim, wherein said characteristic of said second radio access technology transmission comprises a power spectral density profile of transmissions by said second radio access technology.

**6.** The apparatus of any preceding claim, wherein said means for detecting detects that a transmission other than said first radio access technology transmission is occurring when a power spectral density profile of said transmission detected within said first portion matches a power spectral density profile of transmissions by said second radio access technology, and preferably wherein said power spectral density profile of transmissions by said second radio access technology steps between a higher power spectral density and a lower power spectral density, and preferably wherein said higher power spectral density and said lower power spectral density vary by around 3dB.

**7.** The apparatus of any preceding claim, wherein said means for detecting detects that a transmission other than said first radio access technology transmission is occurring when at least one of:

a transmission is detected during at least one period within said first portion corresponding to at least one guard period of said transmission time interval;
a received signal strength is above a threshold during said at least one period within said first portion corresponding to said at least one guard period of said transmission time interval;
received transmissions detected by said first radio access technology receiver decode as other than expected duplicated symbols; and
received transmissions detected by said first radio access technology receiver decode as other than expected first radio access technology duplicated symbols.

**8.** The apparatus of any preceding claim, wherein said means for determining transmits within said second portion of said transmission time interval using said first radio access technology transmitter when said means for detecting detects that no transmissions other than first radio access technology transmissions are occurring.

**9.** The apparatus of any preceding claim, wherein said means for determining determines that no transmissions can be performed in said second portion of said transmission time interval using said first radio access technology transmitter when said means for detecting detects that transmissions other than first radio access technology transmissions are occurring.

**10.** The apparatus of any preceding claim, wherein said means for determining postpones transmissions for a postponement period comprising at least said second portion of said transmission time interval using said first radio access technology transmitter when said detecting detects that transmissions are occurring, and preferably wherein said postponement period comprises at least a plurality of transmission time intervals.

**11.** The apparatus of claim 10, wherein said means for determining selects said postponement period based on a configured subcarrier spacing of said first radio access technology, and preferably wherein said means for detecting reperforms said detecting upon expiry of said postponement period.

**12.** The apparatus of any preceding claim, wherein said first radio access technology comprises New Radio and wherein said second radio access technology comprises Long Term Evolution.

**13.** The apparatus of claim 12 when dependent on claim 11, wherein each Long Term Evolution subframe coincides with a plurality of New Radio slots.

**14.** The apparatus of any preceding claim wherein the means comprise: at least one processor; and at least one memory storing instructions that, when executed by the at least one processor, cause performance of the apparatus.

**15.** A method, comprising:
detecting, using a first radio access technology receiver, whether a transmission other than a first radio access technology transmission is occurring in a first portion of a transmission time interval by identifying whether a characteristic of a transmission in said first portion of said transmission time interval detected by said first radio access technology receiver matches a characteristic of a second radio access technology transmission, and
determining whether to transmit in a second portion of said transmission time interval using a first radio access technology transmitter based on said detecting.

Designated for non-safety road ITS

Designated for safety related ITS

Designated for safety related rail ITS

Shared with non-specific short range devices (SRDs) (d)

Prioritised for road ITS (a) (b)

Prioritised for rail ITS (a) (b) (c)

5855  5865  5875  5885  5895  5905  5915  5925  5935

FIG. 1

| 5855-5865 MHz | 5865-5875 MHz | 5875-5885 MHz | 5885-5895 MHz | 5895-5905 MHz | 5905-5915 MHz | 5915-5925 MHz |
|---|---|---|---|---|---|---|
| For future use | For future use | For future use | For future use | See caption below | LTE-V2X | LTE-V2X (I2V only) and Rail-ITS |

FIG. 2

NR-V2x

LTE-V2x

NR-V2x

Time

(e) Overlayed NR in LTE, without dedicated NR resources

Frequency

NR-V2x

LTE-V2x

Time

(b) TDM

Frequency

NR-V2x

LTE-V2x + NR-V2x

Time

(d) Overlayed NR in LTE, with dedicated NR resources

Frequency

NR-V2x

LTE-V2x

Time

(a) FDM

Frequency

NR-V2x

LTE-V2x

NR-V2x

Time

(c) Mix FDM and TDM

Frequency

FIG. 3

(a)

1. SL-SR

2. Resource allocation

3. SL Transmission (PSCCH/PSSCH)

SL Tx

SL Rx

(b)

Sensing Window

Selection Window

Resources deemed as available for selection in the next period

Resources deemed as available for selection

PSSCH

PSSCH

PSSCH

PS CCH

PS CCH

PS CCH

FIG. 4

■ DMRS

▨ Data

☐ Guard Symbol

FIG. 5

FIG. 6

(a)

(b)

FIG. 7

FIG. 8

Table 8.4.1.1.2-1: PSSCH DM-RS time-domain location

| $l_d$ in symbols | DM-RS position $\bar{l}$ | | | | | |
|---|---|---|---|---|---|---|
| | PSCCH duration 2 symbols | | | PSCCH duration 3 symbols | | |
| | Number of PSSCH DM-RS | | | Number of PSSCH DM-RS | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

FIG. 9

FIG. 10

UE has data to transmit, so the sensing procedure for resource selection is initiated[1]

Collect sensing information including reserved resources and SL-RSRP measurements

Form candidate resource set[2]

Select Tx resources semi-persistently, or up to maximum reservations, with starting time 'm'

Re-evaluate resource selection by keeping decoding other UEs' PSCCH and measuring corresponding PSSCH energy

Re-selection triggered (from re-evaluation)? — Yes

No

Begin transmission

Yes – restart process

Re-selection triggered (by reaching maximum number of reservations)?

No – Continue using reservation

## FIG. 11

Determine the selection window, set *RSRPthreshold*

Initialize candidate single-slot resources set $S_A$

Exclude not-monitored resources

Exclude resources with RSRP greater than *RSRPthreshold*

Increase *RSRPthreshold* by step

Number of remaining slots is greater than initial $0.2 |S_A|$ — No

Yes

Select the final resources

## FIG. 12

FIG. 13

FIG. 14

FIG. 15

Problem 3: The NR Rx and PSFCH resource can be overlapped by a LTE transmission

Problem 3: The NR Rx and PSFCH resource can be overlapped by a LTE transmission

FIG. 16

## FIG. 17

**LTE sub-frame duration**

**NR slot duration**

From Tx prespective with NR with 30 kHz SCS

No LTE Txm detected

May transmit on selected PSCCH/ PSSCH resource

0.5 ms     1 ms

V2x Txm detected

Triggers resource reselection as this resource cannot be used due to overlapping LTE transmission

0.5 ms     1 ms

**(a)**

**LTE sub-frame duration**

**NR slot duration**

From Rx prespective with NR with 30 kHz SCS

No LTE Txm detected

May transmit in PSFCH resource

May transmit in PSFCH resource

0.5 ms     1 ms

V2x Txm detected

Cannot transmit PSFCH resource

Cannot transmit in PSFCH resource

0.5 ms     1 ms

**(b)**

**LTE sub-frame duration**

**NR slot duration**

From Rx prespective with NR with 15 kHz SCS

No LTE Txm detected

May transmit in PSFCH resource

0.5 ms     1 ms

V2x Txm detected

Cannot transmit in PSFCH resource

0.5 ms     1 ms

**(c)**

## FIG. 18

**Adjacent PSCCH+PSSCH Scheme**

PSD (dBm/Hz)

3 dB

3 dB

f

UE2    UE1

**Non-Adjacent PSCCH+PSSCH Scheme**

PSD (dBm/Hz)

3 dB

3 dB

f

UE2   UE1    UE2    UE1

FIG. 19

1. UE is (pre-)configured with NR V2x RP that has shared resources in frequency and time domain with LTE V2X RP.

2. UE has planned NR transmission in this slot, based on NR resource sensing and re-evaluation. Needs to perform short-term re-evaluation

3. Sample received signal for at least one LTE symbol from the slot boundary.

4. Any signal above configured threshold received ?

No → 5. Safe to transmit in remaining part of this slot

Yes

6. Estimate PSD from the received signal.

7. PSD-based LTE transmission detected ?

Yes → 8. Do not transmit in this slot and next x slots

No

9. Slot n+x

10. Continue sampling the received signal and observe the characteristic

11. AGC or Guard based LTE transmission detected ?

Yes → 8. Do not transmit in this slot and next x slots

No

12. OK to transmit PSFCH

FIG. 20

32

Europäisches
Patentamt

European
Patent Office

Office européen
des brevets

## EUROPEAN SEARCH REPORT

**Application Number**

EP 22 18 8888

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/078325 A1 (QUALCOMM INC [US]; CHEN QINGXIN [US] ET AL.) 4 June 2015 (2015-06-04) | 1-3, 9-12,15, 16 | INV. H04W72/12 |
| A | * paragraphs [0015], [0050], [0052], [0053], [0059] – [0061], [0067] – [0071], [0113], [0117] * * figure 14 * | 4-8,13, 14 | ADD. H04W52/04 |
| X | US 2021/400638 A1 (LEE SEUNGMIN [KR] ET AL) 23 December 2021 (2021-12-23) | 1,5-10, 13-16 | |
| A | * table 3 on page 15 * * figure 26 * | 2-4,11, 12 | |
| X | WO 2017/111673 A1 (ERICSSON TELEFON AB L M [SE]) 29 June 2017 (2017-06-29) | 1,4,9, 10,15,16 | |
| A | * page 4 lines 20-32, page 10 lines 13-24, page 11 line 24 – page 12 line 10 * * figure 4 * | 2,3,5-8, 11-14 | |

_____

TECHNICAL FIELDS
SEARCHED      (IPC)

H04W

The present search report has been drawn up for all claims

| Place of search | Date of completion of the search | Examiner |
|---|---|---|
| The Hague | 16 December 2022 | Metozounve, Emeline |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 ...................................................................

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 22 18 8888

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2022

| Patent document cited in search report | | Publication date | Patent family member(s) | | Publication date |
|---|---|---|---|---|---|
| WO 2015078325 | A1 | 04-06-2015 | WO 2015077971 | A1 | 04-06-2015 |
| | | | WO 2015078325 | A1 | 04-06-2015 |
| US 2021400638 | A1 | 23-12-2021 | US 2019075548 | A1 | 07-03-2019 |
| | | | US 2020296691 | A1 | 17-09-2020 |
| | | | US 2020296692 | A1 | 17-09-2020 |
| | | | US 2021400638 | A1 | 23-12-2021 |
| | | | WO 2017150956 | A1 | 08-09-2017 |
| | | | WO 2017150957 | A1 | 08-09-2017 |
| | | | WO 2017150958 | A1 | 08-09-2017 |
| | | | WO 2017150959 | A1 | 08-09-2017 |
| WO 2017111673 | A1 | 29-06-2017 | NONE | | |

EPO FORM P0459

For more details about this annex : see Official Journal of the European Patent Office, No. 12/82